Europäisches Patentamt

European Patent Office

Office européen des brevets

(19)

(11)    EP 0 631 157 B1

(12)    **EUROPÄISCHE PATENTSCHRIFT**

(45) Veröffentlichungstag und Bekanntmachung des Hinweises auf die Patenterteilung:
**17.07.1996   Patentblatt 1996/29**

(51) Int Cl.6: **G02B 5/30**, G02F 1/00

(21) Anmeldenummer: **94113300.1**

(22) Anmeldetag: **25.08.1994**

(54) **Optische Elemente mit abbildender farb- und polarisationsselektiver Reflexion enthaltend cholesterische Flüssigkristalle sowie Herstellung und Verwendung dieser Elemente**

Imaging and colour/polarisation selecting reflective optical element containing cholesteric liquid crystals, and manufacture and use of the same

Elément optique de formation d'images sélectionnant la polarisation et la couleur contenant des cristaux liquides cholestériques, leur préparation et utilisation

(84) Benannte Vertragsstaaten:
**DE FR GB IT NL**

(30) Priorität: **26.08.1993  DE 4328785**

(43) Veröffentlichungstag der Anmeldung:
**28.12.1994   Patentblatt 1994/52**

(73) Patentinhaber: **Consortium für elektrochemische Industrie GmbH**
**D-81379 München (DE)**

(72) Erfinder:
• **Maurer, Robert, Dr.**
  **D-81371 München (DE)**

• **Beiergrösslein, Stefan**
  **D-81379 München (DE)**
• **Kreuzer, Franz-Heinrich, Dr.**
  **D-82152 Martinsried (DE)**

(56) Entgegenhaltungen:
**EP-A- 0 302 619**          **EP-A- 0 348 141**
**EP-A- 0 407 830**          **US-A- 3 679 290**
**US-A- 4 679 911**

• **PATENT ABSTRACTS OF JAPAN vol. 13, no. 499 (P-957) 10. November 1989 & JP-A-01 200 325**
• **JAPANESE JOURNAL OF APPLIED PHYSICS, Bd. 29, Nr. 10, Oktober 1990, Tokyo, JP, Seiten 1974-1984; M. SCHADT et al.: "New Liquid Crystal Polarized Color Projection Principle"**

## Beschreibung

Die Erfindung betrifft optische Elemente mit abbildender farb- und polarisationsselektiver Reflexion enthaltend cholesterische Flüssigkristalle sowie Herstellung und Verwendung dieser Elemente.

Cholesterische Flüssigkristalle (Cholesteric Liquid Crystal; CLC) reflektieren zirkular polarisiertes Licht in einem von der helikalen Struktur des CLC abhängigen Wellenbereich. Die Reflexionsfarbe wird durch die Ganghöhe (pitch p) der helikalen Struktur bestimmt und durch die zentrale Wellenlänge $\lambda_{max}$ des Reflexionsbandes mit der Bandbreite $\Delta\lambda$ beschrieben. Die zentrale Wellenlänge des Reflexionsbandes wird im folgenden als Reflexionswellenlänge bezeichnet. Die Reflexionswellenlänge ist vom Betrachtungswinkel abhängig. Sie gehorcht folgender Gleichung:

$$\lambda_{max}=n*p*\cos\psi \tag{1},$$

wobei n der mittlere Brechungsindex des CLCs ist und $\psi$ der Winkel zwischen dem einfallendem Strahl und dem Einfallslot. Somit ist bei senkrechtem Lichteinfall $\psi = 0°$.

Die charakteristischen Reflexionseigenschaften der CLCs treten in Richtung der Helixachse oder wenig abweichend von dieser Richtung auf. Die bei senkrechtem Einfall zirkulare Polarisation des reflektierten Lichtes nimmt mit zunehmendem Einfallswinkel ab. Die Zirkularpolarisation des reflektierten Lichtes läßt sich somit nur für kleine Einfallswinkel nutzen.

Die Anwendung cholesterischer Flüssigkristalle als optische Transmissionsfilter ist aus US-A-3,679,290 bekannt. Neben den verschiedenen Einstellmöglichkeiten für die Wellenlänge und die Polarisation des reflektierten Lichtes werden Kombinationen von CLC-Schichten beschrieben, die als Notch- und Bandenfilter wirken. Die CLC-Schichten sind eben angeordnet.

Aus US-A-4,679,911 ist bekannt, CLCs zwischen einer gekrümmten und einer ebenen Oberfläche einzuschließen, so daß die Dicke der CLC-Schicht nicht konstant ist, sondern in definierter Weise variiert. An Stellen mit verschwindender Schichtdicke wird das gesamte einfallende Licht transmittiert, an solchen mit endlicher Schichtdicke wird das Licht reflektiert, wenn die Reflexionswellenlänge des cholesterischen Flüssigkristalls und die Wellenlänge des einfallenden Lichtes übereinstimmen. Die beschriebene Anordnung zur Strahlprofilbeschneidung nützt gekrümmte Flächen zur Begrenzung des CLC-Volumens. Aufgrund unterschiedlicher Krümmungsradien variiert das eingeschlossene Volumen dabei in der Schichtdicke. Dadurch kommt es zu der gewünschten ortsabhängig unterschiedlichen Transmission.

In EP-A-302 619 wird ein ebener Filter aus CLC verwendet, um einen Teilbereich des sichtbaren Lichtes unter Erhaltung der Zirkularpolarisation zu reflektieren. Der beschriebene Reflektor ändert nur die Ausbreitungsrichtung des Lichtes; er wirkt jedoch nicht abbildend im Sinne einer Linse. Die beschriebene Zirkularpolarisation des reflektierten Lichtes ist zudem aufgrund des großen Einfallswinkels unvollständig.

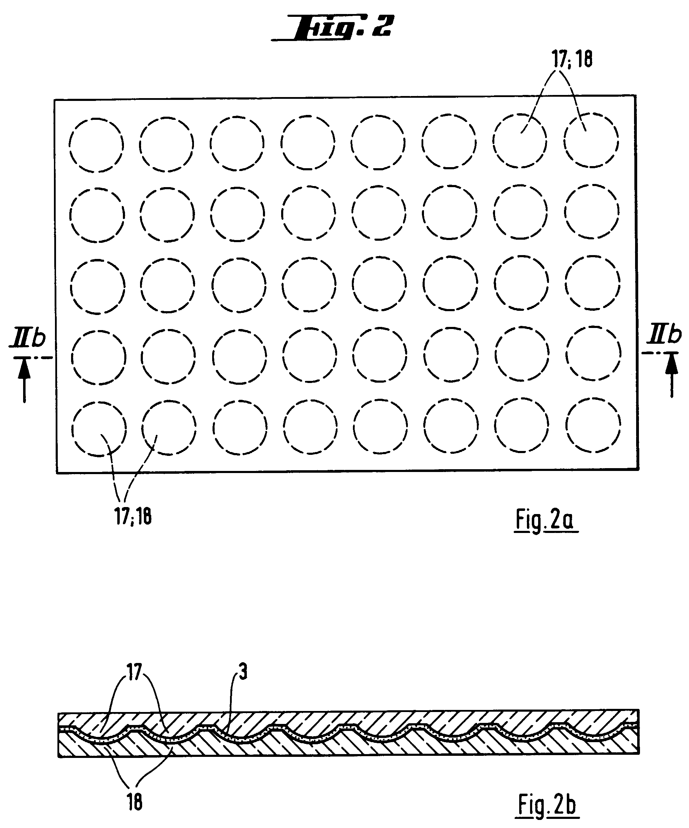

Aus EP-A-348 141 ist ein Infrarotfilter bekannt, dessen Kantenschärfe durch Verwendung eines CLCs verbessert wird. Die dort in Fig. 2b abgebildete gekrümmte cholesterische Schicht in der dargestellten Scheibe einer Schutzbrille reflektiert Licht unerwünschter Wellenlänge in beliebiger Richtung ohne abzubilden und filtert so das transmittierte Licht.

Schadt et al. beschreiben in Japanese Journal of Applied Physics, 29, No. 10 1990, 1974-1984, eine Anordnung von planen CLC-Reflektoren zur Farb- und Polarisationsselektion für ein Projektionsdisplay. Die Reflexion an der CLC-Schicht erfolgt jeweils unter einem Winkel von 45°. Da die zirkulare Polarisation des reflektierten Lichtes mit zunehmendem Einfallswinkel abnimmt, ist das reflektierte Licht dieser Polarisatoren kaum polarisiert.

EP-A-0 407 830 offenbart eine Beleuchtungsvorrichtung, bei der die wellenlängen- und polarisationsselektive Reflexion benutzt wird, um eine Lichtquelle für zirkular polarisiertes Licht zu erhalten.

Die Erfindung betrifft optisch abbildende wellenlängen- und polarisationsselektive Elemente gemäß Anspruch 1.

Unter cholesterischen Flüssigkristallen (CLCs) sind im Sinne der Erfindung Stoffe zu verstehen, die eine helikale Phase aufweisen, deren optische Eigenschaften denen einer nematisch chiralen Phase entsprechen.

Die Erfindung betrifft ferner die Herstellung der optisch abbildenden wellenlängen- und polarisationsselektiven Reflektoren.

Die Erfindung betrifft auch die Verwendung dieser Reflektoren als Strahlteiler oder Rekombinatoren beispielsweise in Geräten mit hohem Lichtfluß wie beispielsweise in einem Projektionsdisplay.

Die erfindungsgemäßen Reflektoren reflektieren Licht in Abhängigkeit vom verwendeten CLC farb- und polarisationsselektiv. Sie wirken zudem als im Sinne einer Linse abbildendes, optisches Element. Nichtreflektiertes Licht setzt seinen Weg ohne Änderung durch die CLC-Schicht fort. Somit ergibt sich ein abbildender Reflektor, dessen Wirkung auf eine Farbe und einen Drehsinn der Zirkularpolarisation beschränkt ist und der das transmittierte Licht ansonsten nicht beeinflußt. Mit einem solchen erfindungsgemäßen Element können die Funktionen eines Farbfilters, eines Polarisators und einer Linse in einem Element vereinigt werden.

Im Sinne der Erfindung ist unter Licht elektromagnetische Strahlung mit Wellenlängen zwischen 300 und 3000 nm, bevorzugt zwischen 350 und 2000 nm, zu verstehen.

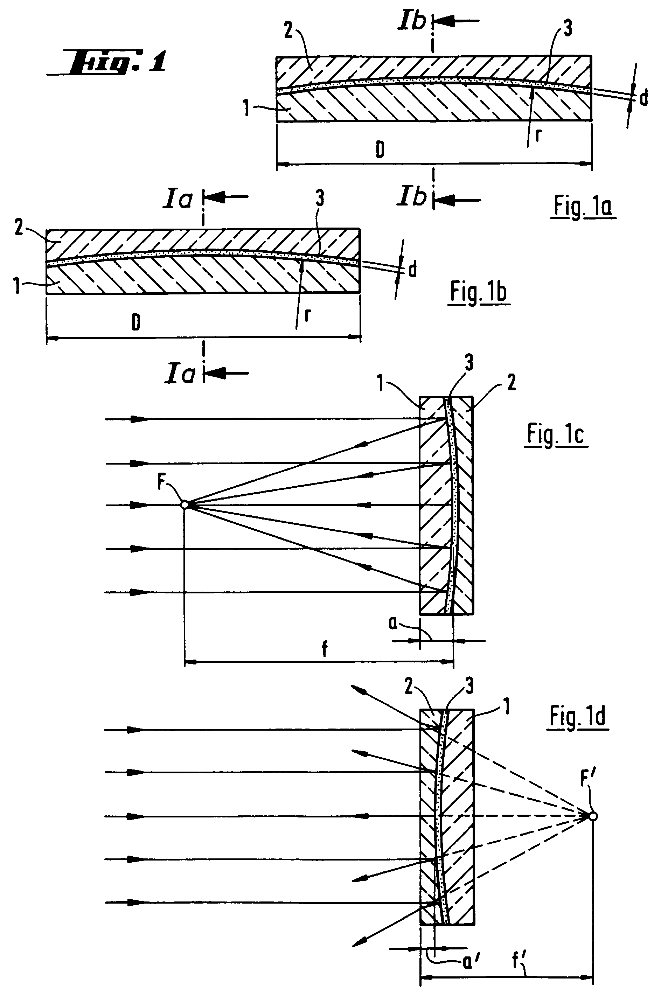

Beispielsweise wirkt ein optisches Element bestehend aus einer CLC-Schicht zwischen einer Plankonvex- und einer Plankonkav-Linse, je nachdem auf welcher Seite es bestrahlt wird, auf einer Seite als Konkav- und auf der anderen Seite als Konvexspiegel. Im ersten Fall wird parallel einfallendes Licht durch die CLC-Schicht reflektiert und im Brennpunkt gesammelt; im zweiten Fall wird das Licht divergent und scheint vom imaginären Brennpunkt hinter dem Element auszugehen, wie dies in Fig. 1 dargestellt ist.

Der Strahlengang des nichtreflektierten Lichts wird durch die erfindungsgemäßen Elemente nicht beeinflußt. Die Brennweite der Elemente läßt sich durch geeignete Wahl der Brennweite der verwendeten Linsen einstellen.

Neben den genannten Plankonvex- und Plankonkav-Linsen sind Linsen mit Zylindergeometrie, die in einer Richtung keine Krümmung aufweisen, senkrecht zu dieser Richtung jedoch parabolisch, kreisförmig oder elliptisch gekrümmt sind, weitere Beispiele für lichtdurchlässige Substrate mit gekrümmter Oberfläche.

Ein ideal abbildender Reflektor sollte eine parabolisch gekrümmte Oberfläche haben. Es können jedoch auch Linsen mit sphärisch oder ellyptisch gekrümmter Oberfläche zur Herstellung erfindungsgemäßer Elemente verwendet werden.

Durch Verwendung von Linsen mit beidseitig gekrümmter Oberfläche, also konvex-konkav-, konvex-konvex- oder konkav-konkav-Linsen, können Elemente hergestellt werden, die nicht nur den reflektierten Lichtanteil abbilden, sondern auch den transmittierten Lichtanteil.

Elemente bestehend aus einem CLC zwischen einer plankonvexen und einer plankonkaven sphärischen Linse eignen sich beispielsweise zur Anwendung in Projektionsdisplays. Die hohen Lichtflüsse in solchen Geräten erfordern die Verwendung von lichtunempfindlichen, Licht nicht absorbierenden Stoffen wie beispielsweise CLCs. Bisher stand einer Anwendung von CLCs in solchen Geräten die mangelhafte polarisierende Wirkung von CLC-Schichten bei Bestrahlung unter großen Winkeln entgegen. Bei der Verwendung der erfindungsgemäßen Elemente ist dieses Problem gelöst, da keine großen Winkel auftreten. Zudem wird durch Verwendung der erfindungsgemäßen Elemente die Anzahl der Komponenten in den Projektionsdisplays reduziert und die Lichtausbeute der Displays erhöht.

Mehrere erfindungsgemäße optische Elemente lassen sich auf einem Substrat kombinieren. Eine solche Kombination, bestehend aus einem Feld von 5 x 8 erfindungsgemäßen Hohlspiegeln, ist in Fig. 2 dargestellt.

Die erfindungsgemäßen Reflektoren lassen sich dadurch herstellen, daß auf die gekrümmte Oberfläche eines lichtdurchlässigen Substrats ggf. nach dem Aufbringen einer Orientierungsschicht mindestens ein cholesterischer Flüssigkristall aufgebracht wird und dieser cholesterische Flüssigkristall anschließend durch Aufbringen einer zweiten gekrümmten Oberfläche eines lichtdurchlässigen Substrats, auf welche ggf. ebenfalls eine Orientierungsschicht aufgebracht wurde, derart verteilt wird, daß ein dünner CLC Film konstanter Dicke zwischen den gekrümmten Oberflächen der beiden lichtdurchlässigen Substrate entsteht. Vor dem Aufbringen auf die Substratoberfläche wird der cholesterische Flüssigkristall ggf. geklärt oder bis nahe, bevorzugt 20°C, an den Klärpunkt erwärmt, um ihn fließfähig zu machen. Bevorzugt werden auch die gekrümmten Oberflächen des lichtdurchlässigen Substrats dazu auf etwa die gleiche Temperatur erwärmt.

Ein weiteres Verfahren zur Herstellung von erfindungsgemäßen, optischen Elementen ist dadurch gekennzeichnet, daß man mindestens einen CLC in den Zwischenraum konstanter Dicke zwischen zwei gekrümmten Oberflächen einbringt und die flüssigkristalline Substanz in an sich bekannter Weise derart orientiert, daß die Helixachse auf der Substratoberfläche senkrecht steht.

Als Substrate zur Herstellung der gekrümmten Oberflächen sind alle Materialien geeignet, die durchlässig für Licht sind; bevorzugt werden Gläser, Quarz und/oder hochtransparente Kunststoffe verwendet. Bevorzugt werden optische Gläser, wie beispielsweise BK7 (Schott Glaswerke, Mainz, Deutschland), verwendet.

Die Oberflächen der Substrate werden so ausgebildet, daß zwischen den beiden Oberflächen ein Spalt konstanter Dicke entsteht. Die Dicke des Spalts ist durch Änderung des Abstands der Substratoberflächen voneinander einstellbar. Um den Spalt auf die gewünschte Dicke einzustellen, können Abstandshalter verwendet werden. Die gewünschte Dicke liegt bevorzugt zwischen 0,5 und 150 μm, besonders bevorzugt zwischen 2 und 70 μm. Durch die gekrümmten Substratoberflächen wird somit eine gekrümmte Zelle konstanter Dicke gebildet.

Ein einfaches Beispiel einer solchen Anordnung der Oberflächen ist die Kombination einer plankonvexen, sphärischen Linse der Brennweite $f_{konvex}$ mit einer plankonkaven Linse der Brennweite $f_{konkav}$, wobei beide Linsen einen identischen Brechungsindex n besitzen, derart, daß die konvex gekrümmte Seite der konkav gekrümmten Seite anliegt (siehe Fig. 1).

Für die Krümmungsradien r gilt:

$$r_{konvex} + d = -r_{konkav} \tag{2},$$

wobei d die Dicke des Spalts zwischen den beiden Oberflächen bedeutet. Die im Regelfall verwendeten Linsen haben Krümmungsradien größer 5 mm, entsprechend minimale Brennweiten von 10 mm. Im Vergleich hierzu kann die Dicke des Spalts von in der Regel maximal 150 μm, bevorzugt maximal 70 μm, vernachlässigt werden. Somit können in der Regel Linsen betragsmäßig gleicher aber entgegengesetzter Krümmung verwenwerden. Für diese gilt:

$$r_{konvex} = -r_{konkav} \qquad (3).$$

Somit gilt wegen

$$f = r/(n-1) \qquad (4),$$

$$f_{konvex} = -f_{konkav} \qquad (5):$$

Oberflächen mit komplizierteren Geometrien lassen sich zur Herstellung der erfindungsgemäßen Reflektoren verwenden, solange folgende Bedingungen für die Krümmung p(x,y) von Substrat 1 und Substrat 2 am Ort (x,y) erfüllt ist:

$$p_1(x,y) = -p_2(x,y) \qquad (6).$$

Dabei betrachte man die Krümmung p(x,y) als Modulation der Substratoberfläche (x,y), wobei auch hier gemäß den oben gemachten Ausführungen der Abstand zwischen den Substraten vernachlässigt wird.

Für Linsen mit sehr kleinen Krümmungsradien, beispielsweise solche mit Krümmungsradien kleiner 5 mm, ist die Dicke der CLC-Schicht nach Gln. (2) zu berücksichtigen.

Zur Füllung des Spalts zwischen den beiden Substratoberflächen ist jeder CLC mit einer Ganghöhe geeignet, die zur Reflexion bei einer Wellenlänge des Lichtes im Bereich von 300 bis 3000 nm führt.

Art und Anteil des Chiralikums des CLCs bestimmen die Ganghöhe der verdrillten Struktur des CLCs und damit die Wellenlänge des reflektierten Lichtes. Die Verdrillung der Struktur kann sowohl links- als auch rechtshändig sein. Die CLCs können zudem polymerisierbare, polykondensierbare oder einer Polyaddition zugängliche Gruppen enthalten, die eine spätere Fixierung der orientierten Struktur ermöglichen. Beispiele für solche Gruppen sind Methacryloxy- und Acryloxygruppen.

Geeignete Materialien und ihre Herstellung sind beispielsweise in DE-C2-3,604,757, in EP-A2-358 208, in EP-A-0 066 137 (entspricht US 4,388,453) oder in der in D.J. Broer et al in 14. Int. Liquid Conf., Abstracts II, 921 (1992), genannten Literatur beschrieben.

Bevorzugt geeignet sind dreidimensional vernetzbare Polyorganosiloxane nach EP-A-358,208.

Zur Füllung des Spalts zwischen den beiden Oberflächen sind jedoch grundsätzlich alle CLCs geeignet. Es kann eine Art von CLC, es kann aber auch ein Gemisch aus mindestens zwei dieser Flüssigkristalle eingesetzt werden. Monomere Mischungen cholesterischer, flüssigkristalliner Substanzen lassen sich beispielsweise durch Kombination eines nematischen Flüssigkristalls mit einem Chiralikum herstellen.

Durch die Verwendung flüssigkristalliner Substanzen, deren Reflexionswellenlänge im Bereich des jeweils gewünschten Reflexionsmaximums liegt, lassen sich Reflektoren für beliebige Wellenlängen herstellen. Durch die Auswahl von flüssigkristallinen Substanzen mit rechts- oder linkshelikaler Struktur läßt sich die durch den erfindungsgemäßen Reflektor reflektierte Zirkularpolarisation jeweils wunschgemäß einstellen.

Zur Herstellung reflektierender Schichten ist eine homogene Ausrichtung der Helixachse der CLCs senkrecht zur Reflektoroberfläche erforderlich.

Dies kann im Prinzip mit allen bekannten Verfahren zur Orientierung von CLC-Schichten erfolgen. Beispielsweise läßt sich die Orientierung durch Scheren oder Aufbringen einer Orientierungsschicht durchführen.

Eine planare Orientierung der bevorzugt verwendeten, nematischen, cholesterischen Materialien läßt sich dadurch erzeugen, daß als Orientierungsschicht beispielsweise ein dünner Film aus Polyimid oder Nylon oder einer anderen geeigneten Substanz auf die Substratoberfläche aufgetragen wird. Das Auftragen erfolgt beispielsweise nach Verfahren wie sie aus der Herstellung von LC-Displays bekannt sind. Durch Reiben beispielsweise mit einem Samttuch erhält der Film seine planar orientierende Wirkung.

Eine homöotrope Orientierung, wie sie bei Verwendung von smektischen Materialien erforderlich ist, läßt sich beispielsweise durch Aufbringen von Lecitin als Orientierungsschicht bewirken.

Bei Verwendung von CLCs mit lateralem Dipolmoment ist eine Orientierung auch dadurch möglich, daß nach Befüllen der Zelle mit der flüssigkristallinen Substanz ein elektrisches Feld derart angelegt wird, daß die Feldrichtung senkrecht zur Substratoberfläche orientiert ist. Die Orientierung mittels eines elektrischen Feldes wird beispielsweise dadurch ermöglicht, daß die Substratoberflächen mit einer leitfähigen Beschichtung versehen werden. Dies kann beispielsweise mittels ITO-Bedampfung der Substratoberflächen geschehen.

Der CLC wird in an sich bekannter Art in die Zelle gefüllt. Dies ist beispielsweise durch Nutzung der Kapilarität möglich.

Durch den erfindungsgemäßen Reflektor wird paralleles Licht einer Zirkularpolarisation im Spektralbereich der Reflexionsbande reflektiert und im Brennpunkt des Reflektors fokusiert. Das nicht reflektierte Licht setzt seinen Weg unverändert fort. Das transmittierte Licht steht somit zur weiteren Verwendung zur Verfügung. Das fokusierte reflektierte Licht kann beispielsweise durch einen kleinen Planspiegel zunächst umgelenkt werden, um so außerhalb des ursprünglichen Strahlengangs zur beliebigen Verwendung verfügbar zu sein.

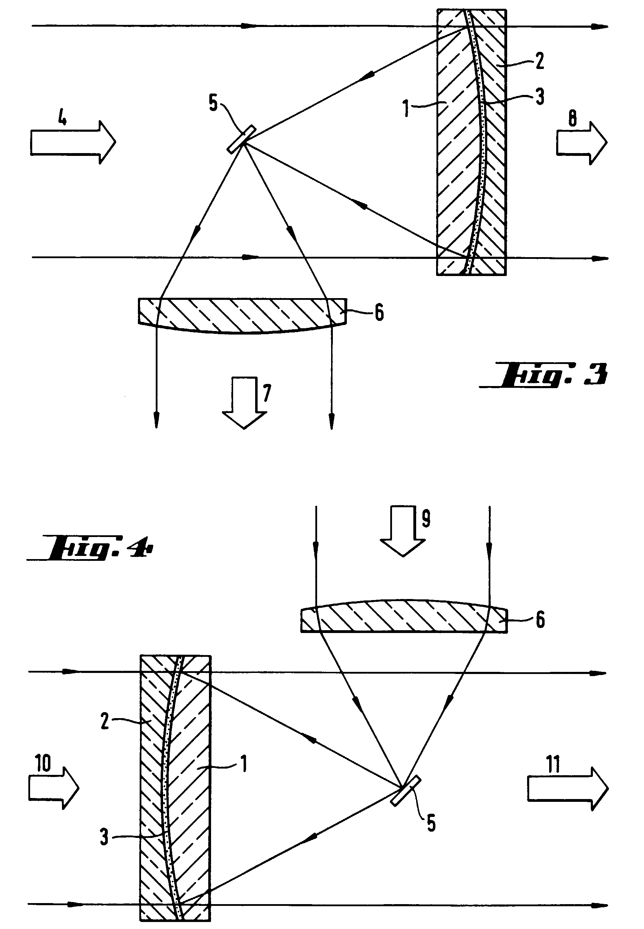

Die erfindungsgemäße Verwendung eines sphärischen CLC-Elements als Strahlteilerelement ist in Fig. 3 dargestellt. Auf den Reflektor bestehend aus einer sphärischen, plankonvexen Linse (1), einer sphärischen, plankonkaven Linse (2) und einer CLC-Schicht (3) fällt parallel einfallendes, unpolarisiertes, weißes Licht (4). Der reflektierte Teil des Lichtes wird auf einen Spiegel (5) fokusiert und durch die Sammellinse (6) gebündelt. Dieser Teilstrahl (7) ist zirkular polarisiert und spektral auf die Reflexionsbande der CLC-Schicht beschränkt. Dem transmittierten Licht (8) fehlt dieser Anteil, so daß es innerhalb des Reflexionsbandes entgegengesetzt zirkular polarisiert ist und für Wellenlängen, die nicht im Reflexionsband liegen, unpolarisiert ist.

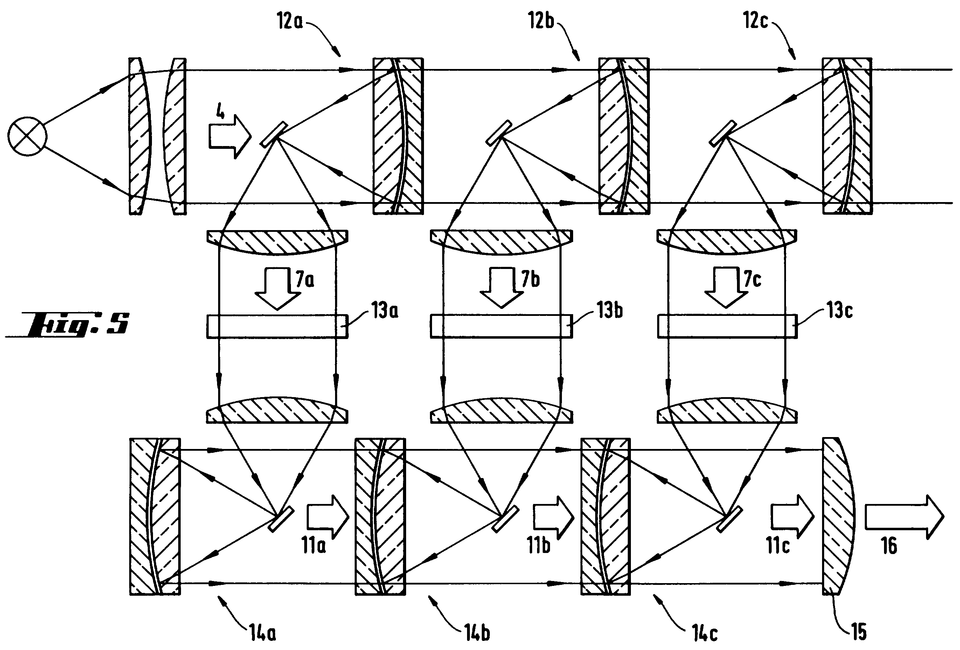

Die erfindungsgemäße Verwendung eines sphärischen CLC-Elements zur Rekombination abbildender Strahlengänge mit unterschiedlichen Farben ist in Fig. 4 dargestellt. Einfallendes, paralleles Licht (9) wird durch eine Sammellinse (6) auf einen Spiegel (5) fokusiert, fällt von diesem auf das erfindungsgemäße Element bestehend aus einer sphärischen, plankonvexen Linse (1), einer sphärischen, plankonkaven Linse (2) und der CLC-Schicht (3) und wird von diesem reflektiert und in den transmittierten Strahl (10) eingekoppelt, wenn Zirkularpolarisation und Farbe mit der durch die CLC-Schicht (3) reflektierten Zirkularpolarisation und Farbe übereinstimmen und man erhält das rekombinierte Licht (11). Der transmittierte Strahl (10) wird nicht beeinflußt, wenn er nur Farbkomponenten außerhalb der Reflexionsbande der CLC-Schicht (3) enthält.

Die erfindungsgemäßen Strahlteiler und Rekombinatoren ermöglichen somit sowohl die Aufteilung der Spektalbereiche als auch die Polarisation des jeweiligen Spektralbereiches, während herkömmliche Strahlteiler und Polarisatoren zur Aufteilung bzw. zum Zusammenführen der Spektralbereiche dichroitische Spiegel verwenden, welche das unter 45° auftreffende Licht um 90° ablenken und die nötige Polarisation durch separate Folien getrennt von der Aufteilung der Spektralbereiche durchführen.

Der Ersatz der dichroitischen Spiegel in herkömmlichen Strahlteilern durch eine bekannte planare CLC-Schicht, um durch Ausnutzung der zirkularpolarisierten Reflexion den Polarisator einzusparen, ist nicht möglich, da die polarisierende Wirkung der bekannten cholesterischen Schicht bei Reflexion unter einem Winkel von 45° ungenügend ist (siehe z.B. Schadt et al., Japanese Journal of Applied Physics, 29, No. 10 1990, 1974-1984).

Bei Verwendung eines erfindungsgemäßen, sphärischen Reflektors treten bei üblicherweise verwendeten Aperturen nur kleine Reflexionswinkel von bevorzugt unter 20°, besonders bevorzugt unter 15°, auf, so daß die bei senkrechtem Einfall gute Polarisation der cholesterischen Reflexion erhalten bleibt.

Beispielsweise können, wie in Fig. 5 dargestellt, durch die Kombination von 3 erfindungsgemäßen Strahlteilern (12 a - 12 c) mit jeweils verschiedenen CLC-Schichten die Grundfarben Rot, Grün und Blau mit definierter Zirkularpolarisation selektiert werden (7 a - 7 c), die Zirkularpolarisation durch je ein Flüssigkristalldisplay (13 a - 13 c), wie sie bereits im Stand der Technik Verwendung finden, ortsmoduliert, d.h. je nach Schaltzustand des Bildpunktes wird die Zirkularpolarisation invertiert oder bleibt erhalten, und die 3 Strahlengänge durch eine zweite Dreierkombination aus erfindungsgemäßen Reflektoren (14 a -14 c) mit jeweils verschiedenen CLC-Schichten rekombiniert werden. Die rekombinierten Teilstrahlen (11 a - 11 c) werden durch eine Abbildungsoptik (15) auf einen Betrachtungsschirm (16) projiziert. Durch eine solche Kombination von Elementen, welche die Grundfarben Rot, Grün und Blau reflektieren, läßt sich ein Projektionsdisplay aufbauen, in dem Polarisation, Farbzerlegung und Farbrekombination durch cholesterische Schichten bewirkt werden.

Fig. 1 zeigt Aufbau und Verwendung eines erfindungsgemäßen, optischen Elements bestehend aus einer sphärischen Plankonvex-Linse (1), einer sphärischen Plankonkav-Linse (2) sowie einer CLC-Schicht (3) zwischen den beiden Linsen. Es bedeutet: r: Krümmungsradius der Plankonvex-Linse; D: Durchmesser des optischen Elements; d: Dicke der CLC-Schicht (entspricht dem Abstand der Linsen (1) und (2)); a: Dicke der Konvexlinse im Zentrum; f und F: Brennweite und Brennpunkt des erfindungsgemäßen, optischen Elements bei Verwendung als Konkavspiegel; a': Dicke der Konkavlinse im Zentrum; f' und F': Brennweite und imaginärer Brennpunkt des erfindungsgemäßen optischen Elements bei Verwendung als Konvexspiegel; Fig. 1 a) zeigt einen Längsschnitt durch das Element. Die in Fig. 1 b) dargestellte Schnittebene ist eingezeichnet.

Fig. 1 b) zeigt einen Längsschnitt senkrecht zu Fig. 1 a) durch das Element. Die in Fig. 1 a) dargestellte Schnittebene ist eingezeichnet.

Fig. 1 c) zeigt den Strahlengang des Lichts bei Verwendung des erfindungsgemäßen Elements als Konkavspiegel.

Fig. 1 d) zeigt den Strahlengang des Lichts bei Verwendung des erfindungsgemäßen Elements als Konvexspiegel.

Fig. 2 a) zeigt in Aufsicht die Kombination von 5 x 8 erfindungsgemäßen Hohlspiegeln auf einem Substrat. Der in Fig. 2 b) dargestellte Schnitt ist eingezeichnet.

Fig. 2 b) zeigt schematisch und stark überhöht einen Querschnitt durch die in Fig. 2 a) dargestellte Aufsicht. Zwischen der transparenten Substratoberfläche enthaltend ein Feld von 5 x 8 konvexen Linsen (17) und der transparenten Substratoberfläche enthaltend 5 x 8 konkave Linsen (18) befindet sich eine CLC-Schicht (3) konstanter Dicke.

Fig. 3 zeigt ein erfindungsgemäßes Strahlteilerelement zur Trennung einer Farbe mit definierter Polarisation vom einfallenden, unpolarisierten, weißen Licht. Es bedeutet: (1) Plankonvexe Linse, (2) Plankonkave Linse, (3) CLC-Schicht, (4) Parallel einfallendes, weißes, unpolarisiertes Licht, (5) Planspiegel, (6) Sammellinse, (7) Zirkularpolarisiertes Licht mit dem Spektralbereich der cholesterischen Reflexionsbande, (8) Transmittiertes Licht, es fehlt der durch die CLC-Schicht reflektierte Anteil.

Fig. 4 zeigt ein erfindungsgemäßes Strahlteilerelement zur Rekombination abbildender Strahlengänge mit unterschiedlichen Farben. Es bedeutet: (1) Plankonvexe Linse, (2) Plankonkave Linse, (3) CLC-Schicht, (5) Planspiegel, (6) Sammellinse, (9) Zirkular polarisiertes Licht aus dem Spektralbereich der cholesterischen Reflexionsbande, (10) Licht von außerhalb der cholesterischen Reflexionsbande, (11) Rekombiniertes Licht.

Fig. 5 zeigt die Kombination mehrerer Strahlteilerelemente zur Trennung und Rekombination der Elementarfarben Rot, Grün und Blau in einem Projektionsdisplay. Es bedeutet: (4) Parallel einfallendes, weißes, unpolarisiertes Licht, (7) Zirkular polarisiertes Licht aus dem Spektralbreich der cholesterischen Reflexionsbande, (11) Rekombiniertes Licht, (12 a-c) Strahlteiler entsprechend Fig. 3 für (12 a) rotes, (12 b) grünes und (12 c) blaues Licht, (13 a-c) Flüssigkristalldisplay zur Erzeugung des (13 a) roten, (13 b) grünen und (13 c) blauen Teilbildes, (14 a-c) Rekombinator entsprechend Fig. 4 für (14 a) rotes, (14 b) grünes und (14 c) blaues Licht, (15) Abbildungsoptik, (16) Projektion des Bildes zum Betrachtungsschirm.

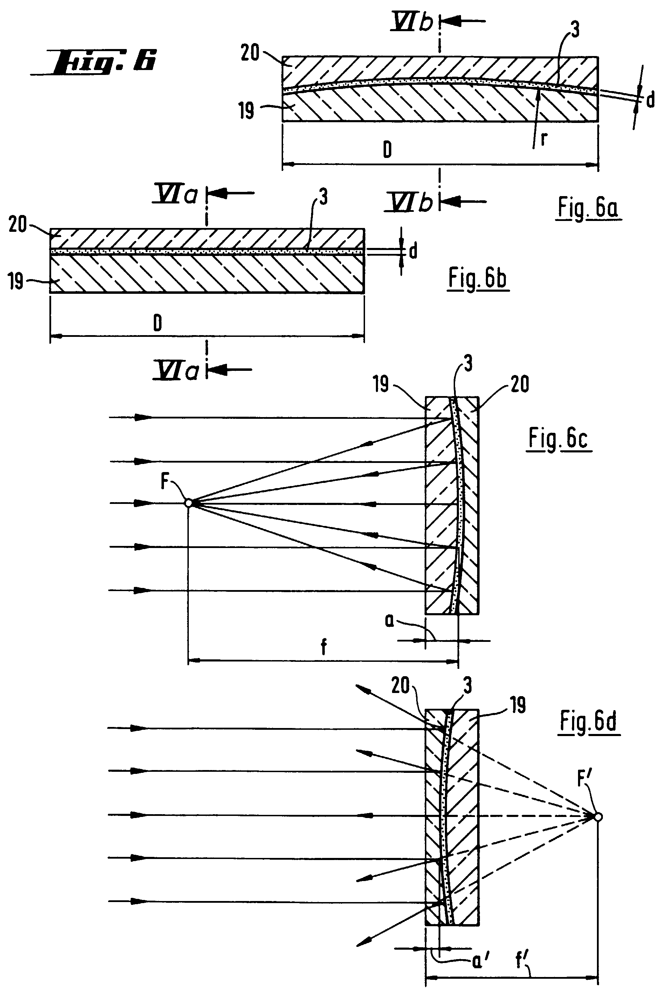

Fig. 6 zeigt Aufbau und Verwendung eines erfindungsgemäßen optischen Elements bestehend aus einer zylinderförmigen Plankonvex-Linse (19), einer zylinderförmigen Plankonkav-Linse (20) sowie einer CLC-Schicht (3) zwischen den beiden Linsen. Es bedeutet: r: Krümmungsradius der Plankonvex-Linse; D: Durchmesser des optischen Elements; d: Dicke der CLC-Schicht, entspricht dem Abstand der Linsen; a: Dicke der Konvexlinse im Zentrum; f und F: Brennweite und Brennpunkt des erfindungsgemäßen, optischen Elements bei Verwendung als Konkavspiegel; a': Dicke der Konkavlinse im Zentrum; f' und F': Brennweite und imaginärer Brennpunkt des erfindungsgemäßen, optischen Elements bei Verwendung als Konvexspiegel.

Fig. 6 a) zeigt einen Längsschnitt durch das Element. Die in Fig. 6 b) dargestellte Schnittebene ist eingezeichnet.

Fig. 6 b) zeigt einen Längsschnitt senkrecht zu Fig. 6 a) durch das Element. Die in Fig. 6 a) dargestellte Schnittebene ist eingezeichnet.

Fig. 6 c) zeigt den Strahlengang des Lichts bei Verwendung des erfindungsgemäßen Elements als Konkavspiegel.

Fig. 6 d) zeigt den Strahlengang des Lichts bei Verwendung des erfindungsgemäßen Elements als Konvexspiegel.

Die folgenden Beispiele dienen der weiteren Erläuterung der Erfindung:

Für die Verwendung in dem erfindungsgemäßen Verfahren wurden folgende Substanzen verwendet:

Substanz I:

Die Substanz Wacker-LC-Silicon-CC3767 (käuflich erhältlich bei Wacker-Chemie GmbH; 81737 München) ist ein nematisches, cholesterisches, flüssigkristallines Organosiloxan. Bei 70°C liegt das Reflexionsmaximum dieses CLC bei 670 nm. Das reflektierte Licht ist linkshelikal polarisiert.

Substanz II:

Die Substanz Wacker-LC-Silicon-CC3939 (käuflich erhältlich bei Wacker-Chemie GmbH; 81737 München) ist ein nematisches, cholesterisches, flüssigkristallines Organosiloxan. Bei 70°C liegt das Reflexionsmaximum dieses CLC bei 390 nm. Das reflektierte Licht ist linkshelikal polarisiert.

Substanz III:

Die Substanz Wacker-LC-Silicon-CC37150 (käuflich erhältlich bei Wacker-Chemie GmbH; 81737 München) ist ein nematisches, cholesterisches, flüssigkristallines Organosiloxan. Bei 70°C liegt das Reflexionsmaximum dieses CLC bei 1500 nm. Das reflektierte Licht ist linkshelikal polarisiert.

Substanz IV a, b, c:

Durch Mischen der Substanzen I - III läßt sich jede Reflexionswellenlänge zwischen 390 nm und 1500 nm einstellen. Es wurden 3 Mischungen für die Grundfarben rot, grün und blau hergestellt, deren Reflexionswellenlängen bei 634 nm (a: 95 % Substanz I und 5 % Substanz II), 530 nm (b: 70 % Substanz I und 30 % Substanz II) und 453 nm (c: 40 % Substanz I und 60 % Substanz II) liegen, wenn sie bei 70°C polymerisiert wurden.

Substanz V:

Es wurde ein nematisches, cholesterisches, flüssigkristallines Organosiloxan wie folgt synthetisiert:

a) Darstellung von 4-(Propen-2-oxy)benzoesäuredoristerylester

50 g Cholestadien (98 %ig, Aldrich GmbH, 7924 Steinheim) werden in 800 ml trockenem Essigsäureethylester, dem 30 ml Essigsäure zugesetzt wurden, gelöst und nach Zugabe von 1,5 g Platinoxid in einen Autoklaven von 2 1 Volumen überführt. Die Hydrierung erfolgt bei 50°C und 10 atm Wasserstoffdruck und ist in der Regel nach 24 Stunden beendet. Nach beendeter Reaktion wird der Katalysator abfiltriert, das Lösungsmittel abrotiert und das erhaltene Doristerol aus Ethanol umkristallisiert. Ausbeute: 42,5 g (88,5 %). Die Reinheit der Substanz wird mit Hilfe von $^1$H-NMR- und $^{13}$C-NMR-Spektroskopie sichergestellt.

17 g 4-(Propen-2-oxy)benzoesäurechlorid (hergestellt nach bekannten Verfahren ausgehend von 4-Hydroxybenzoesäuremethylester durch Allylierung, Verseifung und Überführung in das Säurechlorid) und 32 g Doristerol werden in 200 ml trockenem Toluol gelöst und 15 Stunden zum Rückfluß erhitzt. Anschließend wird das Lösungsmittel abdestilliert und der Rückstand aus Ethanol umkristallisiert; Ausbeute: 44,9 g (Ausbeute 99 %), Schmelzpunkt 92°C (n*105°Ci).

b) Hydrosilylierung

1 g 4-(Propen-2-oxy)benzoesäuredoristerylester, 1,53 g 4(Propen-2-oxybenzoesäure-4'-phenylphenylester (hergestellt nach üblichen Darstellungsverfahren) und 646 mg Pentamethylcyclopentasiloxan werden in 20 ml trockenem Toluol gelöst und nach Zugabe von 0,1 ml einer Lösung von Dicyclopentadienplatindichlorid (1 Gew.-% in Methylenchlorid) 1 Stunde auf 100°C erwärmt. Zu der auf 50°C abgekühlten Lösung gibt man 1,45 g 4-(Propen-2-oxy)benzoesäure-(4-methacryloxy)phenylester (hergestellt nach üblichen Darstellungsverfahren), 500 ppm Hydrochinon und weitere 0,1 ml der Katalysatorlösung; diese Lösung wird eine halbe Stunde bei 70 - 80°C gerührt. Nach beendeter Reaktion wird der Katalysator über eine kurze, mit Kieselgel gefüllte Säule (1 = 3 cm, Durchmesser = 3 cm) abgetrennt und das Produkt in Ethanol ausgefällt. Man erhält 2,8 g (60 %) einer Substanz mit einer Reflexionswellenlänge von 456 nm bei 60°C. Das reflektierte Licht ist rechtshelikal polarisiert.

Substanz VI:

Die nematische Mischung Merck-ZLI-1565 (E. Merck, Darmstadt) wird durch Zugabe von 20 % wt. des Chiralikums Merck-ZLI-811 zu einem nematischen, cholesterischen Flüssigkristall, der bei 770 nm linkshelikales Licht reflektiert.

**Beispiel 1**

Zylinderförmiger Reflektor (Fig. 6 a+b zeigt Schnitte durch das Element):

Zwischen einer plankonvexen (19) und einer plankonkaven (20) Zylinderlinse aus Glas (BK7 mit $n_{BK7}$ = 1,5187) der Brennweiten 300 mm und -300 mm wurde eine reflektierende CLC-Schicht (3) erzeugt. Dabei wurde die Substanz IVb mit einer Reflexionswellenlänge von 530 nm verwendet und zur späteren Photopolymerisation mit 2 % Photoinitiator vermengt (Irgacure 907; Ciba Geigy). Im einzelnen wurden die gekrümmten Oberflächen der Zylinderlinsen zunächst mit einer gehärteten Polyimidschicht versehen und anschließend zur Orientierung mit einem Samttuch unidirektionell gerieben. Auf die gekrümmte Oberfläche der auf 70°C temperierten Konkavlinse wurde eine ausreichende Menge des ebenfalls auf etwa 70°C erwärmten CLCs gegeben und anschließend durch Auflegen der ebenfalls auf etwa 70°C erwärmten Konvexlinse verteilt, bis ein dünner Film (Schichtdicke ca. 10 μm) zwischen den Flächen verblieb. Abschließend wurde der Film durch Bestrahlung mit UVA-Licht polymerisiert.

Die Abbildungseigenschaften dieses Elementes für linkshelikal polarisiertes Licht aus dem Reflexionsband sind die eines zylindrischen Hohlspiegels mit einem Krümmungsradius von ±155,6 mm. Bei einem freien Hohlspiegel ist die Brennweite für achsnahe Strahlen auf der konkaven Seite r/2 bzw. -r/2 für die konvexe Seite (Fig. 6 c+d). Die Glasauflage des Linsensubstrats führt eine zusätzliche, brechende Grenzfläche in den Strahlengang ein, so daß sich die Brennweite nach der Gleichung

$$f = a + (r/2-a)/n \tag{7}$$

auf f = 52,6 mm für den Konkav- (a = 4 mm) und auf f'= -48,7 mm für den Konvex-Spiegel berechnet (a' = -7,5 mm; siehe auch Tabelle 1).

Tabelle 1.

| Parameter der in Beispiel 1 bis 9 beschriebenen, optischen Elemente (Längenangaben in [mm]; die Abkürzungen entsprechen den in den Zeichnungen verwendeten; Brennweiten f und f' berechnet nach Gln. 7; $f_{konvex}$: Brennweite der Konvexlinse; identisch $f_{konkav}$). | | | | | | | |
|---|---|---|---|---|---|---|---|
| Beispiel | $f_{konvex}$ | D | a | a' | r | f | f' |
| 1 | 300 | 60 | 4 | -7,5 | 155,6 | 52,6 | -48,7 |
| 2, 3, 4, 5, 6, 7 | 200 | 50 | 6 | -2 | 103,7 | 36,2 | -33,5 |
| 8 | 600 | 95 | 6,6 | -3 | 311,2 | 104,7 | -101,4 |
| 9 | 150 | 22,4 | 2,8 | -2 | 77,8 | 26,6 | -24,9 |
| 10 | 10 | 5 | 2,6 | -2 | 5,2 | 2,6 | -1 |

**Beispiel 2**

Sphärischer Reflektor, Hohlspiegel (Fig. 1 a, b zeigen Schnitte durch das rotationssymmetrische Element): Zwischen einer plankonvexen (1) und einer plankonkaven (2) sphärischen Linse der Brennweiten 200 mm und -200 mm wurde analog zu den in Beispiel 1 beschriebenen Schritten aus Substanz IVa eine rot reflektierende, polymerisierte CLC-Schicht (3) hergestellt. Die Abbildungseigenschaften für linkshelikal polarisiertes Licht aus dem Reflexionsband sind die eines sphärischen Hohlspiegels (vergleiche Fig. 1 c, d). Abmessungen und Brennweiten des Elementes sind in Tabelle 1 zusammengefaßt.

**Beispiel 3**

Analog zu Beispiel 2 wurde ein sphärischer Hohlspiegel mit dem grün reflektierenden CLC der Substanz IVb hergestellt.

**Beispiel 4**

Analog zu Beispiel 2 wurde ein sphärischer Hohlspiegel mit dem blau reflektierenden CLC der Substanz IVc hergestellt.

**Beispiel 5**

Analog zu Beispiel 2 wurde ein sphärischer Hohlspiegel mit dem bei 1500 nm reflektierenden CLC der Substanz III hergestellt.

**Beispiel 6**

Analog zu Beispiel 2 wurde ein sphärischer Hohlspiegel mit Substanz V hergestellt. Substanz V ist nicht polymerisierbar. Das Element wurde deshalb durch Abkühlen unter den Glaspunkt von Substanz V, der bei ca. 30°C liegt, fixiert.

**Beispiel 7**

Analog zu Beispiel 2 wurde ein sphärischer Hohlspiegel mit Substanz VI hergestellt. Die Fixierung des Elementes erfolgte hier jedoch nicht durch Polymerisation des Flüssigkristalls, sondern durch Verkleben der Linsenränder mit einem käuflichen, lösungsmittelfreien Kleber (UHU Plus sofortfest).

**Beispiel 8**

Analog zu Beispiel 2 wurde ein sphärischer Hohlspiegel mit Linsen der Brennweite 600 mm und -600 mm hergestellt (siehe Tab. 1).

**Beispiel 9**

Analog zu Beispiel 2 wurde ein sphärischer Hohlspiegel mit Linsen der Brennweite 150 mm und -150 mm hergestellt (siehe Tab. 1).

**Beispiel 10**

Analog zu Beispiel 2 wurde ein sphärischer Hohlspiegel mit Linsen der Brennweite 10 mm und -10 mm hergestellt (siehe Tab. 1).

**Beispiel 11**

Ein polarisierender Strahlteiler wurde aus dem in Beispiel 3 beschriebenen Element aufgebaut (siehe Fig. 3). Hierzu wurde die Wendel einer Glühbirne (12 V, 150 W) mittels eines Kondensors auf unendlich abgebildet. Das somit parallele Licht (4) fiel auf den sphärischen Reflektor (3). Entsprechend der im grünen Spektralbereich liegenden Reflexionsbande der CLC-Schicht wurde eine Zirkularpolarisation des einfallenden weißen Lichtes auf den Spiegel (5) fokusiert. Vom austretenden Strahl (7) wurde nach dem in M. Born, E. Wolf; "Principles of Optics", (Pergamon Press 6th ed.; S. 552) beschriebenen Verfahren der Polarisationsgrad für diverse Aperturen am sphärischen Reflektor vermessen. Die Apertur ist dabei durch das Verhältnis zwischen dem Durchmesser der ausgeleuchteten Fläche und dem Abstand zwischen CLC-Schicht (3) und dem Fokus im Spiegel (5), der Brennweite des Spiegels (nach Tab. 1) gegeben. Die ausgeleuchtete Fläche ließ sich durch eine Blende einstellen. Bis zur maximalen Apertur von 0,28 ergab sich jeweils der gleiche Polarisationsgrad von $0,970 \pm 0,002$, der dem Idealwert von 1 sehr nahe liegt. Die Beobachtungsbandbreite war hierbei auf 20 nm eingeschränkt.

Im Vergleich hierzu wurde für eine 90°-Ablenkung mittels einer planen CLC-Schicht (Einfallswinkel 45°) ein eindeutig schlechterer Polarisationsgrad von 0.90 gemessen.

**Patentansprüche**

1.  Optisch abbildendes Element mit mindestens einer cholesterischen Flüssigkristallschicht (3), welche wellenlängen- und polarisationsselektive Reflexion aufweist und in den Zwischenraum konstanter Dicke zwischen zwei lichtdurchlässigen Substrate (1,2) mit gekrümmter Oberfläche derart eingeschlossen ist, daß die Helixachse des Flüssigkristalls senkrecht zur gekrümmten Oberfläche der lichtdurchlässigen Substrate ausgerichtet ist, wobei die Oberfläche derart gekrümmt ist, daß die Reflexion an der Flüssigkristallschicht eine optische Abbildung erzeugt.

2.  Element gemäß Anspruch 1, dadurch gekennzeichnet, daß als cholesterischer Flüssigkristall mindestens ein Polyorganosiloxan eingesetzt wird.

3.  Element gemäß Anspruch 1 oder 2, dadurch gekennzeichnet, daß als lichtdurchlässiges Substrat mit gekrümmten Oberflächen die konkave Seite einer ersten Zylinderlinse mit der konvexen Seite einer zweiten Zylinderlinse so kombiniert wird, daß das Element in Form eines Zylindersegmentes vorliegt.

4.  Element gemäß Anspruch 1 oder 2, dadurch gekennzeichnet, daß als lichtdurchlässiges Substrat mit gekrümmter Oberfläche die konkave Seite einer ersten Linse mit der konvexen Seite einer zweiten Linse so kombiniert wird, daß der Reflektor in Form eines Hohlspiegels vorliegt.

5.  Optisches Element, dadurch gekennzeichnet, daß mehrere Elementen gemäß einem oder mehreren der Ansprüche 1 bis 4 auf einem Substrat kombiniert sind.

6.  Polarisierender, farbselektiver Strahlteiler enthaltend mindestens ein optisches Element gemäß einem oder mehreren der Ansprüche 1 bis 5.

7.  Polarisierender, farbselektiver Rekombinator enthaltend mindestens ein optisches Element gemäß einem oder mehreren der Ansprüche 1 bis 6.

8.  Projektionsdisplay enthaltend mindestens ein optisches Element gemäß einem oder mehreren der Ansprüche 1 bis 7.

9. Verfahren zur Herstellung von optischen Elementen gemäß einem oder mehreren der Ansprüche 1 bis 7, dadurch gekennzeichnet, daß mindestens ein cholesterischer Flüssigkristall in den Zwischenraum konstanter Dicke zwischen zwei gekrümmte Oberflächen lichtdurchlässiger Substrate eingebracht wird und die flüssigkristalline Substanz in an sich bekannter Weise orientiert wird.

10. Verfahren zur Herstellung von optischen Elementen gemäß einem oder mehreren der Ansprüche 1 bis 7, dadurch gekennzeichnet, daß auf die ggf. erwärmte, gekrümmte Oberfläche eines lichtdurchlässigen Substrats ggf. nach dem Aufbringen einer Orientierungsschicht mindestens ein ggf. erwärmter, cholesterischer Flüssigkristall aufgebracht wird und dieser cholesterische Flüsigkristall anschließend durch Aufbringen einer ggf. erwärmten, zweiten, gekrümmten Oberfläche eines lichtdurchlässigen Substrats, auf welche ggf ebenfalls eine Orientierungsschicht aufgebracht wurde, derart verteilt wird, daß ein dünner CLC-Film konstanter Dicke zwischen den gekrümmten Oberflächen der beiden lichtdurchlässigen Substrate entsteht.

**Claims**

1. Element which forms an optical image, having at least one cholesteric liquid crystal layer (3) which has wavelength- and polarization-selective reflection and is enclosed in the cavity of constant thickness between two light-transmitting substrates (12) having curved surfaces in such a way that the helix axis of the liquid crystal is aligned perpendicular to the curved surface of the light-transmitting substrates the surface being curved in such a way that the reflection at the liquid crystal layer produces an optical image.

2. Element according to Claim 1, characterized in that the cholesteric liquid crystal employed is at least one polyorganosiloxane.

3. Element according to Claim 1 or 2, characterized in that the light-transmitting substrate having curved surfaces is the concave side of a first cylindrical lens combined with the convex side of a second cylindrical lens in such a way that the element is in the form of a cylinder segment.

4. Element according to Claim 1 or 2, characterized in that the light-transmitting substrate having curved surfaces is the concave side of a first lens combined with the convex side of a second lens in such a way that the reflector is in the form of a concave mirror.

5. Optical element, characterized in that a plurality of elements according to one or more of Claims 1 to 4 are combined on a substrate.

6. Polarizing, colour-selective beam splitter containing at least one optical element according to one or more of Claims 1 to 5.

7. Polarizing, colour-selective recombiner containing at least one optical element according to one or more of Claims 1 to 6.

8. Projection display containing at least one optical element according to one or more of Claims 1 to 7.

9. Process for the production of optical elements according to one or more of Claims 1 to 7, characterized in that at least one cholesteric liquid crystal is introduced into the cavity of constant thickness between two curved surfaces of light-transmitting substrates, and the liquid-crystalline substance is aligned in a manner known per se.

10. Process for the production of optical elements according to one or more of Claims 1 to 7, characterized in that at least one cholesteric liquid crystal, warmed if desired, is applied to the curved surface, warmed if desired, of a light-transmitting substrate, if desired after application of an alignment layer, and this cholesteric liquid crystal is subsequently distributed by applying a second, curved surface, warmed if desired, of a light-transmitting substrate to which an alignment layer has, if desired, likewise been applied, in such a way that a thin CLC film of constant thickness is formed between the curved surfaces of the two light-transmitting substrates.

**Revendications**

1. Elément optique de formation d'images ayant au moins une couche cholestérique à cristaux liquides (3), qui présente une réflexion sélective pour ce qui est de la longueur d'onde et de la polarisation, et qui est enclose dans l'espace intermédiaire d'épaisseur constante entre deux substrats transparents (1, 2) à surface courbée, de sorte que l'axe hélicoïdal du cristal liquide soit orienté perpendiculairement à la surface courbée des substrats transparents, la surface étant courbée de sorte que la réflexion sur la couche à cristaux liquides produise une image optique.

2. Elément selon la revendication 1, caractérisé en ce que l'on utilise, en tant que cristal liquide cholestérique au moins un polyorganosiloxane.

3. Elément selon la revendication 1 ou 2, caractérisé en ce que l'on combine, en tant que substrat transparent à surfaces courbées la face concave d'une première lentille cylindrique, avec la face convexe d'une deuxième lentille cylindrique de sorte que l'élément soit présent sous la forme d'un segment cylindrique.

4. Elément selon la revendication 1 ou 2, caractérisé en ce que l'on combine, en tant que substrat transparent à surface courbée, la face concave d'une première lentille avec la face convexe d'une deuxième lentille, de sorte que le réflecteur soit présent sous la forme d'un miroir concave.

5. Elément optique, caractérisé en ce que sont combinés, sur un substrat, plusieurs éléments conformément à une ou à plusieurs des revendications 1 à 4.

6. Dispositif de fractionnement de rayons polarisant, sélectionnant la couleur, contenant au moins un élément optique conformément à une ou à plusieurs des revendications 1 à 5.

7. Elément recombinateur polarisant, sélectionnant la couleur, contenant au moins un élément optique conformément à une ou à plusieurs des revendications 1 à 6.

8. Dispositif d'affichage à projection contenant au moins un élément optique conformément à une ou à plusieurs des revendications 1 à 7.

9. Procédé de fabrication d'éléments optiques conformément à une ou à plusieurs des revendications 1 à 7, caractérisé en ce que l'on introduit au moins un cristal liquide cholestérique dans l'espace intermédiaire d'épaisseur constante entre deux surfaces courbées de substrats transparents, et en ce que l'on oriente la substance à cristaux liquides d'une manière en soi connue.

10. Procédé de fabrication d'éléments optiques conformément à une ou à plusieurs des revendications 1 à 7, caractérisé en ce que l'on applique sur la surface courbée, le cas échéant chauffée, d'un substrat transparent, le cas échéant après l'application d'une couche d'orientation, au moins un cristal liquide cholestérique, le cas échéant chauffé, et en ce que l'on répartit ce cristal liquide cholestérique ensuite, par l'application d'une deuxième surface courbée, le cas échéant chauffée, d'un substrat transparent, sur laquelle a été appliquée une couche d'orientation, de manière à ce qu'il se forme, entre les surfaces courbées des deux substrats transparents, un film CLC mince d'épaisseur constante.

Fig. 1

Fig. 1a

Fig. 1b

Fig. 1c

Fig. 1d

**Fig. 2**

17; 18

IIb

IIb

17; 18

Fig. 2a

17    3

18

Fig. 2b

Fig. 3

Fig. 4

Fig. 5

# Fig. 6

VIb

20

3

19

d

r

D

Fig. 6a

VIa

20

3

VIb

d

19

D

Fig. 6b

VIa

19

3

20

Fig. 6c

F

f

a

20

3

19

Fig. 6d

F'

a'

f'